(19) Europäisches Patentamt
European Patent Office
Office européen des brevets

(11) **EP 4 779 702 A2**

(12) **EUROPEAN PATENT APPLICATION**

(43) Date of publication:
**22.07.2026 Bulletin 2026/30**

(21) Application number: **25208944.6**

(22) Date of filing: **15.10.2025**

(51) International Patent Classification (IPC):
***H01M 4/133** (2010.01)* ***H01M 4/36** (2006.01)*
***H01M 4/587** (2010.01)* ***H01M 10/052** (2010.01)*
***H01M 10/0525** (2010.01)* ***C01B 32/21** (2017.01)*

(52) Cooperative Patent Classification (CPC):
**H01M 10/052; C01B 32/21; H01M 4/133; H01M 4/366; H01M 4/587; H01M 10/0525;**
H01M 2004/027; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.10.2024 KR 20240141328**

(71) Applicant: **SAMSUNG SDI CO., LTD.**
**Yongin-si, Gyeonggi-do 17084 (KR)**

(72) Inventors:
- **Kim, Yun Sik**
  **Suwon-si, Gyeonggi-do 16678 (KR)**
- **Youm, Chul**
  **Suwon-si, Gyeonggi-do 16678 (KR)**
- **Lee, Eun Joo**
  **Suwon-si, Gyeonggi-do 16678 (KR)**
- **Im, Jin Hee**
  **Suwon-si, Gyeonggi-do 16678 (KR)**
- **Ji, Min Sung**
  **Suwon-si, Gyeonggi-do 16678 (KR)**

(74) Representative: **Meissner Bolte Partnerschaft mbB**
**Patentanwälte Rechtsanwälte**
**Postfach 86 06 24**
**81633 München (DE)**

(54) **NEGATIVE ELECTRODE ACTIVE MATERIAL FOR RECHARGEABLE LITHIUM BATTERY AND RECHARGEABLE LITHIUM BATTERY INCLUDING THE SAME**

(57) A negative electrode active material for a rechargeable lithium battery (100) and a rechargeable lithium battery (100) including the negative electrode active material are provided. The negative electrode active material for a rechargeable lithium battery (100) includes graphite (110) and an amorphous carbon-containing layer (120) surrounding the graphite (110). The amorphous carbon-containing layer (120) includes a first region (130) and a second region (140), which have different R values of Equation 1 (R value = $I_D/I_G$, where $I_D$ and $I_G$ are a maximum peak intensity of the D band at a frequency of 1360±50 $cm^{-1}$ and a maximum peak intensity of the G band at a frequency of 1580±50 $cm^{-1}$, respectively, obtained by Raman spectroscopy for the negative electrode active material), and the R value of Equation 1 in the first region is 0.5 or less.

FIG 1.

110
120
130
140

EP 4 779 702 A2

## Description

### CROSS-REFERENCE TO RELATED APPLICATION

The present application claims priority to and the benefit of Korean Patent Application No. 10-2024-0141328, filed on October 16, 2024, in the Korean Intellectual Property Office, the entire disclosure of which is incorporated herein by reference.

### BACKGROUND

#### 1. Field

The present invention relates to a negative electrode active material for a rechargeable lithium battery, and a rechargeable lithium battery including the same.

#### 2. Description of the Related Art

Recently, with the rapid spread of electronic devices that use batteries, such as cellular phones, laptop computers, and electric vehicles, the demand for rechargeable batteries with high energy density and high capacity has been increasing significantly. In response, research and development to improve the performance of such rechargeable batteries, particularly lithium rechargeable batteries, is actively underway.

A lithium rechargeable battery generally includes a positive electrode and a negative electrode, each of which contains an active material capable of intercalation and deintercalation of lithium ions, and an electrolyte. Electrical energy is generated through oxidation and reduction reactions when lithium ions are intercalated/deintercalated into/from the positive electrode and the negative electrode. For example, the electrical energy is generated when lithium ions are intercalated into the positive electrode and/or deintercalated from the negative electrode during the discharge process.

As a negative electrode active material for a rechargeable lithium battery, natural graphite may be used. Natural graphite has excellent and suitable reversible capacity compared to artificial graphite or a hard carbon negative electrode active material. In addition, natural graphite may have fast charging performance and high battery capacity and efficiency at the same time.

### SUMMARY

The present invention is directed toward a negative electrode active material for a rechargeable lithium battery, which includes graphite and provides a fast-charging effect and high-rate capability.

The present invention is directed toward a rechargeable lithium battery including the negative electrode active material.

Additional aspects will be set forth in part in the description which follows and, in part, will be apparent from the description, or may be learned by practice of the presented embodiments of the disclosure.

According to the present invention, a negative electrode active material includes: graphite; and an amorphous carbon-containing layer surrounding the graphite, wherein the amorphous carbon-containing layer includes a first region and a second region, which have different R values of Equation 1, and the R value of Equation 1 in the first region is 0.5 or less:

**Equation 1**

$$R\ value = I_D/I_G.$$

In Equation 1,

$I_D$ is a maximum peak intensity of the D band at a frequency of 1360±50 $cm^{-1}$ obtained by Raman spectroscopy for the negative electrode active material, and

$I_G$ is a maximum peak intensity of the G band at a frequency of 1580±50 $cm^{-1}$ obtained by Raman spectroscopy for the negative electrode active material).

According to the present invention, there is provided a rechargeable lithium battery, the rechargeable lithium battery including a negative electrode containing the negative electrode active material, and a positive electrode.

The negative electrode active material according to the present invention may provide high reversible capacity, a fast-charging effect, and high-rate capability, thereby increasing the efficiency of a rechargeable lithium battery.

## BRIEF DESCRIPTION OF THE DRAWINGS

The accompanying drawings are included to provide a further understanding of the disclosure, and are incorporated in and constitute a part of this disclosure. The drawings illustrate example embodiments of the disclosure and, together with the description, serve to explain principles of the disclosure. The above and other objects, features, and advantages of the present disclosure will become more apparent to those of ordinary skill in the art by describing certain embodiments thereof in detail with reference to the accompanying drawings, in which:

FIG. 1 is a conceptual diagram of the cross-section of a negative electrode active material for a rechargeable lithium battery according to one or more embodiments of the present disclosure;
FIG. 2 is a schematic diagram illustrating a process of preparing a negative electrode active material according to one or more embodiments of the present disclosure;
FIGS. 3 - 6 are each a cross-sectional view schematically illustrating a rechargeable lithium battery according to one or more embodiments of the present disclosure;
FIG. 7A is a scanning electron microscope (SEM) result of a cross-section of the negative electrode active material of Example 1 of the present disclosure; and
FIG. 7B is an SEM result of the exterior of the negative electrode active material of Example 1 of the present disclosure.

## DETAILED DESCRIPTION

Hereinafter, one or more embodiments of the present disclosure will be described in detail with reference to the accompanying drawings. However, these embodiments are provided by way of example, and the present disclosure is not limited thereto and is only defined by the scope of the appended claims and equivalents thereof.
Unless specifically stated otherwise in this disclosure, when a portion of a layer, film, region, plate, and/or the like is referred to as being "on" another portion, this may include not only embodiments in which the portion is "directly on" the another portion but also embodiments in which there are one or more intervening portions interposed therebetween. In contrast, when a part such as a layer, a film, an area, or a plate is described as being "directly on" another part, there is no intervening part present therebetween.
Unless specifically stated otherwise in this disclosure, singular expressions may include plural expressions. For example, the singular forms "a," "an," "one," and "the" are intended to include the plural forms as well, unless the context clearly indicates otherwise. Also, unless specifically stated otherwise, "A or B," or "A and/or B," or "A/B" may refer to "including A, including B, or including A and B." Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. Further, the utilization of "may" when describing embodiments of the present disclosure refers to "one or more embodiments of the present disclosure."
In this disclosure, a "combination thereof" may refer to a mixture, laminate, composite, copolymer, alloy, blend, and/or reaction product of constituents.
Unless otherwise defined in this disclosure, a size/diameter may be an average size/diameter. Also, a size/diameter may refer to an average particle size/diameter (D50) corresponding to a cumulative volume of 50 vol% in a particle size distribution. An average size/diameter (D50) may be measured by a method widely known in the art, for example, using a particle size analyzer, a transmission electron micrograph, or a scanning electron micrograph. In one or more embodiments, an average size/diameter (D50) may be obtained by performing measurement with a measuring instrument using a dynamic light scattering method, analyzing data to count the number of particles for each particle size range, and calculating an average particle size/diameter from the result. In one or more embodiments, measurement may be performed using a laser diffraction method. For example, when measurement is performed using a laser diffraction method, after particles to be measured are dispersed in a dispersion medium and then irradiated with ultrasound having a frequency of about 28 kHz at an output of 60 W using a commercially available laser diffraction particle diameter measuring instrument (e.g., MT 3000 commercially available from Microtrac), an average size/diameter (D50) corresponding to 50 volume% in the particle diameter distribution in the measuring instrument may be calculated.
In the present disclosure, when particles have a spherical shape, the size may refer to a particle diameter. When the particles are non-spherical, the "size" indicates a major axis length or an average major axis length.
The high-crystallinity graphite included in an active material according to one or more embodiments of the present disclosure may have different crystal properties from general natural graphite, and exhibit crystal properties close to artificial graphite.

"Degree of graphitization" as used herein refers to the proportion of layered structures contained in a carbon-containing material, and may be generally obtained by an X-ray diffraction measurement method. For example, d002 may be measured according to the JIS K 0131-1996 or JB/T 4220-2011 standard using an X-ray diffraction analyzer (e.g., Bruker D8 Discover), and then the degree of graphitization may be calculated using the formulation (0.344-d002)/(0.344-0.3354)×100%. Here, d002 is the interlayer spacing of graphite crystal structure represented in nanometers (nm). X-ray diffraction analysis uses the CuK$\alpha$ ray as a target ray, and may be performed under conditions including a wavelength ($\lambda$) of 1.5418±0.02 Å, a scan 2$\theta$ of 10° to 80°, and a scan speed of 1°/min to 5°/min.

The natural graphite and artificial graphite used herein is a graphitized carbon material that is graphitized by thermal treatment at a high temperature, e.g., 2800 °C.

The amorphous carbon used herein is a non-graphitizable carbon material, which is not graphitized or substantially not graphitized by thermal treatment. The amorphous carbon may include soft carbon and/or hard carbon, and is widely known in the art.

In one or more embodiments, crystalline carbon and amorphous carbon may be classified by X-ray diffraction analysis. The crystalline carbon includes natural graphite and artificial graphite. The natural graphite is naturally occurring graphite obtained by separation from minerals, with d002 of 3.350 Å to 3.360 Å obtained by X-ray diffraction analysis, and the artificial graphite is graphite made by graphitization, with d002 of 3.355 Å to 3.365 Å obtained by X-ray diffraction analysis. d002 of the amorphous carbon obtained by X-ray diffraction analysis is 3.40 Å or more.

In the disclosure, the R value may be expressed as an R value obtained by Raman spectroscopy using a laser with a wavelength of 532 nm based on Equation 1:

## Equation 1

$$\text{R value} = I_D/I_G.$$

In Equation 1,

$I_D$ is a maximum peak intensity of the D band at a frequency of 1360±50 $cm^{-1}$ obtained by Raman spectroscopy for a negative electrode active material, and

$I_G$ is a maximum peak intensity of the G band at a frequency of 1580±50 $cm^{-1}$ obtained by Raman spectroscopy for the negative electrode active material).

The R value of Equation 1 is an indicator of the crystallization development (i.e., the degree of graphitization) of an inner surface of graphite particles. A smaller R value indicates fewer defects in the $sp^2$ bonding of the graphite particles, whereas a larger R value indicates that crystals are less developed due to the disorder or defect of the graphite particle crystals. That is, the larger R value indicates a low degree of graphitization specifically for the graphite particles.

In one or more embodiments, the R value ($I_D/I_G$), obtained by Raman spectroscopy, of the negative electrode active material may be $0.05 \leq I_D/I_G \leq 0.50$, for example, $0.05 \leq I_D/I_G \leq 0.40$, or $0.10 \leq I_D/I_G \leq 0.30$, for example, may be 0.05, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.50. Within this range, the effects and battery performance of the negative electrode active material may be improved.

**Negative electrode active material for rechargeable lithium battery**

A negative electrode active material for a rechargeable lithium battery according to one or more embodiments may include graphite (e.g., in a form of particles) and provide high reversible capacity, fast-charging performance, and high-rate capability. For example, the graphite may be natural graphite or artificial graphite.

The negative electrode active material according to the invention includes: graphite (e.g., in a form of particles); and an amorphous carbon-containing layer that surrounds (e.g., is around) the graphite, wherein the amorphous carbon-containing layer at least includes a first region and a second region, each having a different R value of Equation 1, and the R value of Equation 1 in the first region is 0.5 or less.

In the negative electrode active material, the first region may exhibit crystal properties similar to general natural graphite or artificial graphite due to a high degree of graphitization. The first region may increase the energy density of the negative electrode active material by increasing the lithium-ion storage capacity of the surface of the graphite, and may exhibit artificial graphite-level high-rate capability. For example, the R value of Equation 1 in the first region may be more than 0 and 0.5 or less, or more than 0.05 and 0.4 or less, for example, 0.06, 0.07, 0.08, 0.09, 0.1, 0.11, 0.12, 0.13, 0.14, 0.15, 0.16, 0.17, 0.18, 0.19, 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49, 0.50.

In the negative electrode active material, the second region may exhibit crystal properties similar as pitch.

The R value of Equation 1 in the second region may be higher than that in the first region. This indicates that the second region is not graphitized at all, or is less graphitized than the first region.

The second region is present on the graphite surface or around the first region, and thus may reduce the resistance of a negative electrode film, caused by lithium-ion intercalation/deintercalation, and provide high-rate capability. Accordingly, high reversible capacity caused by the graphite may be maintained, and a fast-charging effect and high-rate capability, caused by graphitization, may also be provided.

According to one or more embodiments, the R value of Equation 1 in the second region may exceed 0.5, e.g., may be more than 0.5 and 1.2 or less, 0.6 to 1.2, 0.6 to 1.1, or 0.6 to 1.0, for example, 0.55, 0.6, 0.65, 0.7, 0.75, 0.8, 0.85, 0.9, 0.95, 1, 1.05, 1.1, 1.15, 1.2.

According to one or more embodiments, through XRD analysis, the first region may have an X-ray diffraction peak of $2\theta$ of 26° to 26.6°, and the second region may have an X-ray diffraction peak of $2\theta$ of 25° to 26°. Within this range, the negative electrode active material can easily provide high reversible capacity, a fast-charging effect, and high-rate capability.

The first region and the second region may be continuously included in the amorphous carbon-containing layer.

According to one or more embodiments, the negative electrode active material may have d002 of 0.336 nm to 0.337 nm as measured through XRD analysis. Within this range, the above-described effects of the negative electrode active material may be further improved.

According to one or more embodiments, the negative electrode active material may have X-ray diffraction peaks of $2\theta$ of 25.0° to 26.6° as measured through XRD analysis. Within this range, the above-described effects of the negative electrode active material may be further improved.

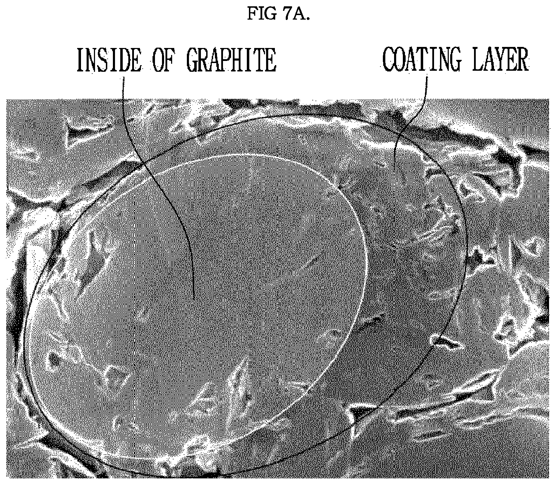

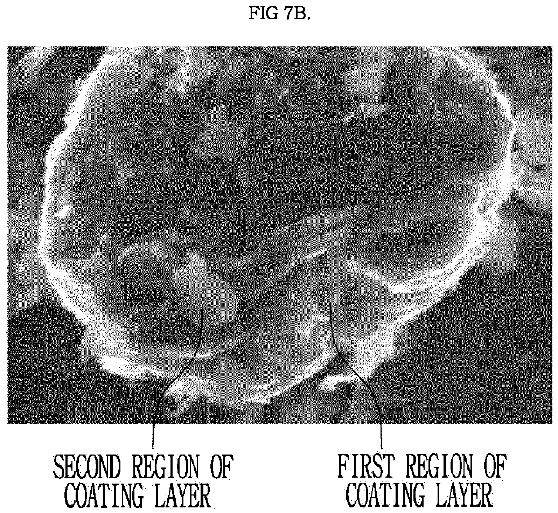

According to one or more embodiments, the first region and the second region may be mixed in the amorphous carbon-containing layer. FIG. 7A and FIG. 7B show SEM images of the cross-section and exterior of the negative electrode active material according to one or more embodiments of the present disclosure.

Referring to FIG. 7A, it can be seen that graphite is present in the negative electrode active material, and there is a coating layer (amorphous carbon-containing layer) surrounding the graphite. Referring to FIG. 7B, it can be confirmed that regions in which plate-like crystals with hexagonal or similar shapes are present, named first regions, and uncrystallized regions, named second regions (the regions other than the first regions), are mixed in a part of the surface of the coating layer of the negative electrode active material.

The amorphous carbon-containing layer may be directly formed on the surface of the graphite. "Directly formed" may refer to that the surface of the graphite is brought into contact with the amorphous carbon-containing layer without any layer interposed between the graphite and the amorphous carbon-containing layer.

In the amorphous carbon-containing layer, the amorphous carbon may be soft carbon, hard carbon, mesophase pitch carbon, calcined coke, or a combination thereof.

A thickness of the amorphous carbon-containing layer may be about 0.1 micrometers ($\mu$m) to about 5 $\mu$m, for example, about 0.1 $\mu$m to about 2 $\mu$m. Within this range, the electron conductivity and lithium-ion conductivity of the negative electrode active material may be improved, which is advantageous for high-speed charge/discharge, the capacity degradation of the negative electrode active material may be prevented or reduced, and side reactions with an electrolyte may be prevented or reduced.

The graphite may include one or more selected from among natural graphite and artificial graphite. For example, in one or more embodiments, the graphite may be natural graphite.

The graphite may be a primary particle, or a secondary particle in which a plurality of primary particles are assembled.

The primary particles may have a particle size (e.g., average particle size) of about 2 $\mu$m to about 20 $\mu$m, for example about 2 $\mu$m, about 3 $\mu$m, about 4 $\mu$m, about 5 $\mu$m, about 6 $\mu$m, about 7 $\mu$m, about 8 $\mu$m, about 9 $\mu$m, about 10 $\mu$m, about 11 $\mu$m, about 12 $\mu$m, about 13 $\mu$m, about 14 $\mu$m, about 15 $\mu$m, about 16 $\mu$m, about 17 $\mu$m, about 18 $\mu$m, about 19 $\mu$m, about 20 $\mu$m, about 5 $\mu$m to about 15 $\mu$m, or about 5 $\mu$m to about 10 $\mu$m. Within this range, there may be no decrease in yield during the production of secondary particles, and when applied to a rechargeable lithium battery, there may be no problem of deterioration in cycle life characteristics. In addition, within this range, there may be no problem of the size of the secondary particle becoming too large during the preparation of the secondary particles, and the negative electrode active material with too large sizes may be difficult to apply to a rechargeable lithium battery. According to one or more embodiments, the primary particle may have a particle size (e.g., average particle size) of about 5 $\mu$m to about 15 $\mu$m. Within this particle size range, during assembly, the generation of voids may be reduced in the battery.

The secondary particle may have a particle size (e.g., average particle size) of about 5 $\mu$m to about 30 $\mu$m. Within this particle size range, during assembly, a charging rate may be raised by increasing lithium-ion intercalation channels of flaky graphite, and during charge/discharge, the expansion of the negative electrode active material may be more effectively inhibited, and the tap density of the negative electrode active material may increase. According to one or more embodiments, the secondary particle may have a particle size (e.g., average particle size) of about 5 $\mu$m, about 6 $\mu$m, about 7 $\mu$m, about 8 $\mu$m, about 9 $\mu$m, about 10 $\mu$m, about 11 $\mu$m, about 12 $\mu$m, about 13 $\mu$m, about 14 $\mu$m, about 15 $\mu$m,

about 16 μm, about 17 μm, about 18 μm, about 19 μm, about 20 μm, about 21 μm, about 22 μm, about 23 μm, about 24 μm, about 25 μm, about 26 μm, about 27 μm, about 28 μm, about 29 μm, about 30 μm, about 5 μm to about 24 μm, or about 8 μm to about 24 μm.

The particle sizes of the primary particle and the secondary particle may be average particle sizes.

The number of the primary particles constituting the secondary particle is not particularly limited as long as they may form the secondary particle. For example, the number of the primary particles constituting a secondary particle may be 2 to 50, 2 to 30, or 2 to 10.

The natural graphite may be flaky graphite with a major axis and a minor axis. A length (e.g., average length) of the major axis may be about 5 μm to about 30 μm. Within this range, the flaky graphite may be randomly oriented, the number of lithium-ion transport channels may be increased, thereby improving the rate capability, and due to suitable edges, efficiency may be appropriately maintained.

According to one or more embodiments, the graphite and amorphous carbon-containing layer in the negative electrode active material may have a weight ratio (graphite:amorphous carbon-containing layer) of 99:1 to 80:20, for example, 95:5 to 85:15, based on a total of 100 parts by weight of the negative electrode active material. Within this range, side reactions with an electrolyte may be reduced, and the rate capability may be further improved.

The negative electrode active material according to one or more embodiments may have a small (e.g., low) specific surface area, that is, a small Brunauer-Emmett-Teller (BET) specific surface area. In one or more embodiments, the specific surface area of the negative electrode active material may be about 0.5 $m^2/g$ to about 2 $m^2/g$, about 0.8 $m^2/g$ to about 2 $m^2/g$, or about 0.8 $m^2/g$ to 1.5 $m^2/g$.

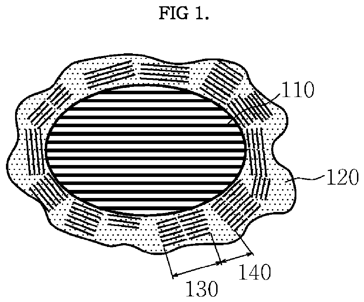

FIG. 1 is a conceptual diagram of a cross-section of a negative electrode active material for a rechargeable lithium battery according to one or more embodiments of the present disclosure.

Referring to FIG. 1 the negative electrode active material includes graphite 110 (e.g., in a form of particles) and an amorphous carbon-containing layer 120 surrounding the graphite 110. The amorphous carbon-containing layer 120 includes a first region 130 and a second region 140.

Here, a method of preparing the negative electrode active material will be described.

The method of manufacturing the negative electrode active material may include the following operations:

preparing a negative electrode active material precursor, which includes graphite and a coating layer surrounding the graphite and including an amorphous carbon precursor and a graphitization catalyst,

forming an amorphous carbon-containing layer, which at least includes a first region and a second region, and includes the graphitization catalyst, by graphitizing a part of the amorphous carbon precursor through thermal treatment of the negative electrode active material precursor at a low temperature, and

preparing the negative electrode active material by removing the graphitization catalyst from the amorphous carbon-containing layer.

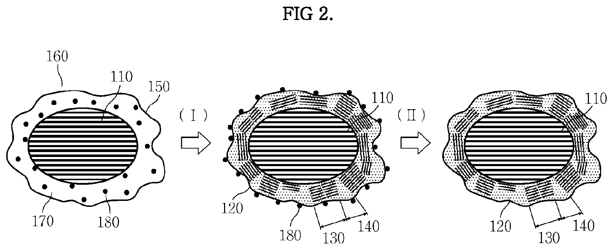

FIG. 2 is a schematic diagram illustrating a process of preparing a negative electrode active material according to one or more embodiments of the present disclosure.

Referring to FIG. 2, a negative electrode active material precursor 160, which includes graphite 110 and a coating layer 150 surrounding the graphite 110, is prepared. The coating layer 150 includes an amorphous carbon precursor 170 and a graphitization catalyst 180.

Referring to process (I), the negative electrode active material precursor 160 is thermally treated at a low temperature to graphitize a part of the amorphous carbon precursor 170, and thereby an amorphous carbon-containing layer 120 at least including a first region 130 and a second region 140 and including the graphitization catalyst 180 is formed on the surface of the graphite 110. The first region 130 and the second region 140 have different degrees of graphitization, and the R value of Equation 1 in the first region is 0.5 or less.

Subsequently, referring to process (II), the negative electrode active material is prepared by removing the graphitization catalyst 180 from the amorphous carbon layer 120.

(1) First, the negative electrode active material precursor is prepared.

The negative electrode active material precursor includes graphite and a coating layer surrounding the graphite and including an amorphous carbon precursor and a graphitization catalyst.

The amorphous carbon precursor is not particularly limited as long as it is a material that can be graphitized. The amorphous carbon precursor may include one or more selected from among synthetic pitch, petroleum-based pitch, and coal-based pitch.

The graphitization catalyst may include a metal or metalloid (semi-metal) catalyst. For example, the metal or metalloid (semi-metal) catalyst may be at least one or more metal elements selected from among iron (Fe), silicon (Si), germanium (Ge), tin (Sn), lead (Pb), phosphorus (P), antimony (Sb), bismuth (Bi), aluminum (Al), gallium (Ga), indium (In), titanium (Ti), manganese (Mn), cobalt (Co), nickel (Ni), copper (Cu), zinc (Zn), silver (Ag), magnesium (Mg), strontium (Sr), and barium (Ba), or a compound containing the metal elements or a mixture thereof. For example, in one or more embodiments, the metal catalyst may include one or more selected from among Mg and Al.

The graphitization catalyst may be included at 2,000,000 ppm or less, for example, more than 1,000 ppm and 2,000,000 ppm or less, or 50,000 ppm to 1,500,000 ppm with respect to the amorphous carbon precursor. Within this range, the graphitization of the amorphous carbon precursor may be sufficiently catalyzed, and the catalyst may be easily removed from the amorphous carbon layer.

According to one or more embodiments, the negative electrode active material precursor may be prepared by coating a mixture of the amorphous carbon precursor and the graphitization catalyst on the surface of the graphite.

For example, the preparation of the negative electrode active material precursor may be performed by mixing the graphite and the mixture of the amorphous carbon precursor and the graphitization catalyst and stirring them for a predetermined time. To form an amorphous carbon layer at least including a first region and a second region, which have different degrees of graphitization, after mixing, the graphite and the mixture of the amorphous carbon precursor and the graphitization catalyst may be stirred for about 0.1 hours to about 10 hours, for example, about 1 hour to about 5 hours.

For example, the mixture of the amorphous carbon precursor and the graphitization catalyst may be included at about 0.1 parts to about 50 parts by weight, for example, about 0.5 parts to about 30 parts by weight with respect to 100 parts by weight of the graphite. Within this range, it may be easy to form an amorphous carbon layer at least including a first region and a second region, which have different degrees of graphitization.

The mixture of the amorphous carbon precursor and the graphitization catalyst may further include a solvent, and thus can be uniformly applied onto the surface of the graphite. The solvent may be a conventional solvent known in the art.

A thickness of the coating layer may be, but is not particularly limited to, about 0.1 μm to about 5 μm, for example, about 0.5 μm to about 2 μm. Within this range, graphitization mediated by the graphitization catalyst progresses well and suitably, and thus the fast-charging effect may be sufficiently provided.

(2) The negative electrode active material precursor is thermally treated at a low temperature to graphitize a part of the amorphous carbon precursor, resulting in the formation of an amorphous carbon-containing layer at least including a first region and a second region and including the graphitization catalyst.

The thermal treatment may include the following operations for uniform coating on the graphite surface.

Operation 1: An operation of softening the amorphous carbon precursor and dispersing it in a liquid phase, which may be performed at, for example, about 150 °C to about 500 °C.

Operation 2: An operation of thermally treating a metal catalyst at a melting point or more and dispersing it in a liquid phase, which may be performed at, for example, about 700 °C to about 1000 °C.

Operation 3: An operation of graphitizing a mixture containing the precursor, and the thermal treatment may be performed at about 600 °C to about 1500 °C, about 800 °C to about 1300 °C, about 900 °C to about 1200 °C, or about 900 °C to about 1100 °C. Within this range, a part of the amorphous carbon precursor may be graphitized to form the first region and the second region.

The thermal treatment may be performed for about 0.1 hours to about 10 hours, for example, about 0.5 hours to about 6 hours. Within this range, the graphitization catalyst and the amorphous carbon precursor may be evenly dispersed on the surface of the secondary particle graphite, a part of the amorphous carbon precursor may be graphitized, and thus the first region and the second region may be formed well and suitably.

The thermal treatment time in each operation may be appropriately adjusted within the scope of achieving the purpose of each operation.

The thermal treatment may be performed in a nitrogen atmosphere, a helium atmosphere, or a combination thereof.

According to one or more embodiments, the graphitization catalyst may be included on an outermost surface of the amorphous carbon-containing layer, or in the amorphous carbon-containing layer.

(3) The negative electrode active material is prepared by removing the graphitization catalyst from the amorphous carbon-containing layer.

The removal of the graphitization catalyst from the amorphous carbon-containing layer may be performed by a common method known in the art. For example, in one or more embodiments, the removal may be performed by treating the thermally treated product with an acid or an acid aqueous solution. For example, the acid may be a combination of one or more selected from among sulfuric acid, hydrochloric acid, nitric acid, acetic acid, and phosphoric acid.

**Rechargeable lithium battery**

According to the invention, a rechargeable lithium battery includes a negative electrode active material for a rechargeable lithium battery.

The rechargeable lithium battery includes: a negative electrode including the negative electrode active material for a rechargeable lithium battery; and a positive electrode. The negative electrode active material for a rechargeable lithium battery is provided and described herein.

## Positive electrode

The positive electrode for a rechargeable lithium battery may include a positive electrode current collector and a positive electrode active material layer on (e.g., formed on) the positive electrode current collector. The positive electrode active material layer includes a positive electrode active material (e.g., in a form of particles) and may further include a binder and/or a conductive material.

In one or more embodiments, the positive electrode may further include an additive that may function as a sacrificial positive electrode.

An amount of the positive electrode active material may be about 90 wt% to about 99.5 wt% based on a total weight of 100 wt% of the positive electrode active material layer. Amounts of the binder and the conductive material may each be about 0.5 wt% to about 5 wt%, based on the total weight of 100 wt% of the positive electrode active material layer.

The positive electrode active material may include a compound (lithiated intercalation compound) that is capable of intercalating and deintercalating lithium. For example, in one or more embodiments, at least one of a composite oxide of lithium and a metal selected from cobalt, manganese, nickel, and combinations thereof may be used.

The composite oxide may be a lithium transition metal composite oxide. Non-limiting examples of the composite oxide may include a lithium nickel-based oxide, a lithium cobalt-based oxide, a lithium manganese-based oxide, a lithium iron phosphate-based compound, a cobalt-free nickel-manganese-based oxide, or a combination thereof.

In one or more embodiments, one or more compounds represented by any one selected from among the following Chemical Formulas may be used: $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_4\text{-}cD_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dGeO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2GbO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the foregoing Chemical Formulas, A is nickel (Ni), cobalt (Co), manganese (Mn), or a combination thereof; X is aluminum (Al), Ni, Co, Mn, chromium (Cr), iron (Fe), magnesium (Mg), strontium (Sr), vanadium (V), a rare earth element, or a combination thereof; D is oxygen (O), fluorine (F), sulfur (S), phosphorus (P), or a combination thereof; G is Al, Cr, Mn, Fe, Mg, lanthanum (La), cerium (Ce), Sr, V, or a combination thereof; and $L^1$ is Mn, Al, or a combination thereof.

In one or more embodiments, the positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of a total metal excluding lithium in the lithium transition metal composite oxide. The high-nickel-based positive electrode active material may be capable of realizing high capacity and can be applied to a high-capacity, high-density rechargeable lithium battery.

The binder serves to attach the positive electrode active material particles well to each other and also to attach the positive electrode active material well to the positive electrode current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons may be used in the battery. Non-limiting examples of the conductive material may include a carbon-based material such as natural graphite, artificial graphite, carbon black, acetylene black, Ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

In one or more embodiments, Al may be used as the positive electrode current collector, but embodiments of the present disclosure are not limited thereto.

## Negative electrode

The negative electrode for a rechargeable lithium battery may include a negative electrode current collector and a negative electrode active material layer on the negative electrode current collector. The negative electrode active material layer may include a negative electrode active material (e.g., in a form of particles), and may further include a binder and/or a conductive material (e.g., an electrically conductive material).

For example, in one or more embodiments, the negative electrode active material layer may include about 90 wt% to about 99 wt% of the negative electrode active material, about 0.5 wt% to about 5 wt% of the binder, and about 0 wt% to about 5 wt% of the conductive material, based on a total weight of 100 wt% of the negative electrode material layer.

The negative electrode active material includes the negative electrode active material according to the present invention. According to one or more embodiments, the negative electrode may include the negative electrode active material according to one or more embodiments at about 95 wt% or more, for example, about 95 wt% to 100 wt% or 100 wt%, of a total weight of 100 wt% of the negative electrode active material. The negative electrode active material may further include a negative electrode active material in addition to the negative electrode active material of one or more embodiments of the present disclosure. This negative electrode active material is conveniently referred to as a second negative electrode active material.

The second negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example, crystalline carbon, amorphous carbon, or a combination thereof. The crystalline carbon may be graphite such as non-shaped (e.g., irregularly shaped), sheet-shaped, flake-shaped, sphere-shaped, or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminum (Al), and tin (Sn).

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_x$ ($0 < x \leq 2$) (e.g., $SnO_2$), a Sn-based alloy, or a combination thereof.

The silicon-carbon composite (e.g., in a form of particles) may be a composite of silicon and amorphous carbon. According to one or more embodiments, the silicon-carbon composite may be in a form of silicon particles and amorphous carbon coated on the surface of the silicon particles. For example, in one or more embodiments, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

In one or more embodiments, the silicon-carbon composite may further include crystalline carbon. For example, the silicon-carbon composite may include a core including crystalline carbon and silicon particles and an amorphous carbon coating layer on a surface of the core.

In one or more embodiments, the Si-based negative electrode active material or the Sn-based negative electrode active material may be used in combination with a carbon-based negative electrode active material.

The binder may serve to attach the negative electrode active material particles well to each other and also to attach the negative electrode active material well to the negative electrode current collector. The binder may include a non-aqueous (e.g., water-insoluble) binder, an aqueous (e.g., water-soluble) binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the binder of the negative electrode, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material (e.g., electron conductor) may be used to impart conductivity (e.g., electrical conductivity) to the electrode. Any material that does not cause chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, Ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative electrode current collector may include a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

## Electrolyte Solution

The electrolyte solution for a rechargeable lithium battery may include a non-aqueous organic solvent and a lithium salt.

The non-aqueous organic solvent may serve as a medium for transmitting ions that takes part in an electrochemical reaction of the rechargeable lithium battery.

The non-aqueous organic solvent may be a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone, and/or the like. The alcohol-based solvent may include ethanol, isopropyl alcohol, and/or the like, and the aprotic solvent may include nitriles such as R-CN (wherein R is a C2 to C20 linear, branched, or cyclic hydrocarbon group, and may include a double bond, an aromatic ring, an ether bond, and the like); amides such as dimethylformamide; dioxolanes such as 1,3-dioxolane, 1,4-dioxolane, and the like; sulfolanes; and the like.

The non-aqueous organic solvents may be used alone or in combination of two or more thereof.

In one or more embodiments, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in the rechargeable lithium battery, enables a basic operation of the rechargeable lithium battery, and improves transportation of the lithium ions between positive and negative electrodes. Non-limiting examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are each an integer of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

The rechargeable lithium battery may further include a separator.

## Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, or a mixed multilayer film such as a polyethylene/polypropylene two-layer separator, a polyethylene/polypropylene/polyethylene three-layer separator, a polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one selected from among polymer polyolefin such as polyethylene and/or polypropylene, polyester such as polyethylene terephthalate and/or polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g., TEFLON), or a copolymer or a mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO,

CaO, GaO, ZnO, $ZrO_2$, $Y_2O_3$, $SrTiO_3$, $BaTiO_3$, $Mg(OH)_2$, boehmite, and a combination thereof, but embodiments of the present disclosure are not limited thereto.

The organic material and the inorganic material may be mixed in one coating layer, or a coating layer including an organic material and a coating layer including an inorganic material may be stacked.

**Rechargeable lithium battery**

The rechargeable lithium battery may be classified into a cylindrical, prismatic, pouch, or coin-type battery, and/or the like, depending on a shape thereof.

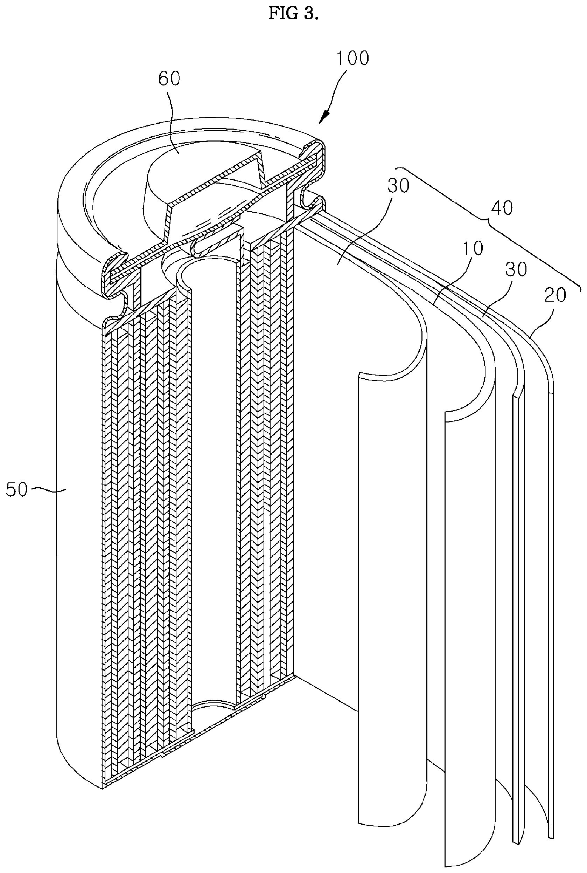

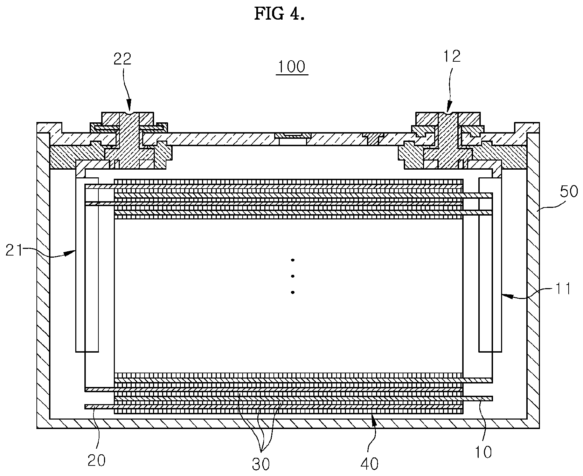

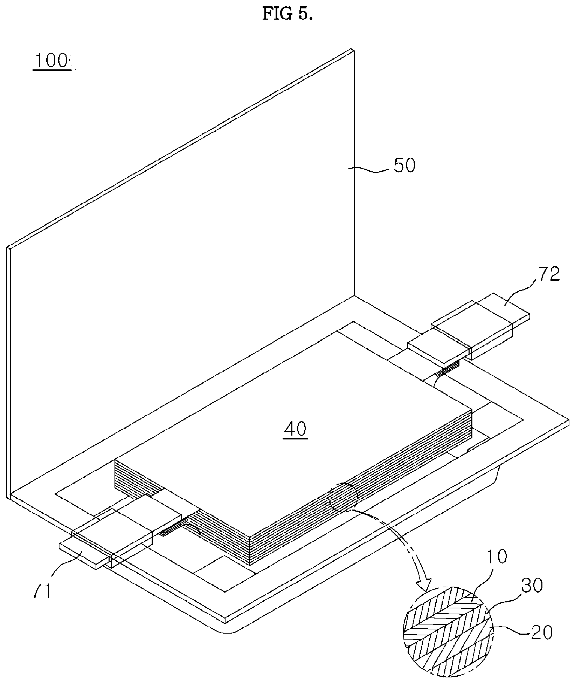

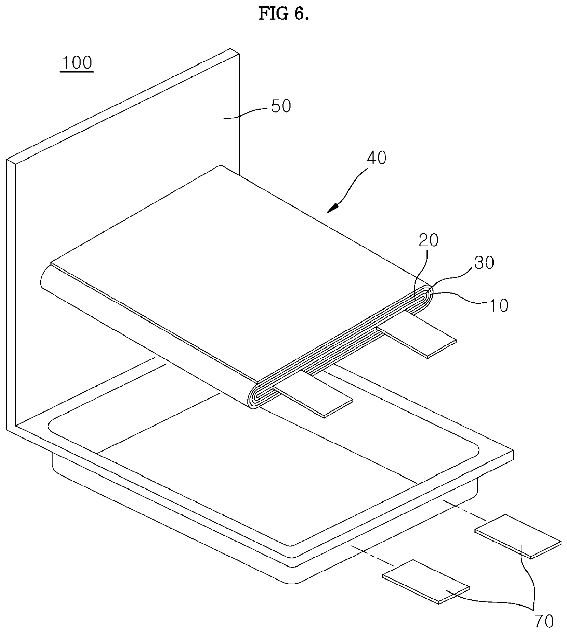

FIGS. 3 to 6 are each a schematic view illustrating a rechargeable lithium battery according to one or more embodiments of the present disclosure. FIG. 3 shows a cylindrical battery, FIG. 4 shows a prismatic battery, and FIGS. 5 and 6 each show a pouch-type battery. Referring to FIGS. 3 to 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. In one or more embodiments, the rechargeable lithium battery 100 may include a sealing member 60 sealing the case 50, as shown in FIG. 3. In one or more embodiments, as shown in FIG. 4, the rechargeable lithium battery 100 may include a positive lead tab 11, a positive terminal 12, a negative lead tab 21, and a negative terminal 22. In one or more embodiments, as shown in FIGS. 5 and 6, the rechargeable lithium battery 100 may include an electrode tab 70, which may be, for example, a positive electrode tab 71 and a negative electrode tab 72, serving as an electrical path for inducing the current formed in the electrode assembly 40 to the outside.

The rechargeable lithium battery according to one or more embodiments may be applied to automobiles, mobile phones, and/or various types of electric devices, as non-limiting examples.

Hereinafter, an example and comparative examples of the present disclosure will be described. However, the following examples are merely provided to illustrate the present disclosure, and the present disclosure is not limited to the following examples.

**Example 1**

(1) A flaky natural graphite material having an average particle size (D50) of 140 μm was pulverized into primary particles having an average particle size (D50) of 8 μm using a jet milling method. The primary particles were assembled into secondary particles having an average particle size (D50) of 10 μm using a spheronizer.

A mixture was prepared by mixing the secondary particles and petroleum-based pitch, the prepared mixture was mixed with a magnesium catalyst, and then the surfaces of the secondary particles were coated with the mixture of the petroleum-based pitch and the magnesium catalyst.

The magnesium catalyst was contained in a weight ratio of 1:1 with respect to the petroleum-based pitch.

The petroleum-based pitch, the magnesium catalyst, and the secondary particles were included in a weight ratio of 10:10:93.

(2) The product obtained in (1) was thermally treated in a nitrogen atmosphere at 360 °C for 1.1 hours, at 800 °C for 1 hour, and at 1100 °C for 3 hours.

(3) The product obtained in (2) was washed with a nitric acid aqueous solution to remove the magnesium catalyst, thereby preparing a negative electrode active material.

The SEM images of the prepared negative electrode active material were obtained, and the results are shown in FIG. 7. As shown in FIG. 7A and FIG. 7B, the first and second regions were mixed on the surface of the spherical natural graphite.

(4) A negative electrode active material slurry was prepared by mixing 97.5 wt% of the prepared negative electrode active material, 1.5 wt% of styrene butadiene rubber as a binder, and 1 wt% of carboxymethyl cellulose as an additive.

A negative electrode was prepared by coating a copper current collector with the negative electrode active material slurry, and performing drying and pressing.

A half-cell was produced using the negative electrode, a lithium metal counter electrode, and an electrolyte. The electrolyte was a mixed solvent of ethylene carbonate and dimethyl carbonate (a volume ratio of 3:7) in which 1 M $LiPF_4$ was dissolved.

**Comparative Example 1**

A negative electrode active material and a half-cell were prepared in substantially the same manner as in Example 1, except that the content ratio (parts by weight) of the petroleum-based pitch, the magnesium catalyst, and the secondary particles was changed to 10:0:93.

**Comparative Example 2**

A negative electrode active material and a half-cell were prepared in substantially the same manner as in Example 1, except that the content ratio (parts by weight) of the petroleum-based pitch, the magnesium catalyst, and the secondary particles was changed to 100:0:0.

**Comparative Example 3**

A flaky natural graphite material having an average particle size (D50) of 140 μm was pulverized into primary particles having an average particle size (D50) of 8 μm using a jet milling method. The primary particles were assembled into secondary particles having an average particle size (D50) of 10 μm using a spheronizer.

A half-cell was prepared substantially in the same manner as in Example 1 with the prepared negative electrode active material.

**Experimental examples**

**R value: first region and second region**

An electrode plate with an electrode density of 6.0 g/cc or more was prepared on a base using the negative electrode active material according to example 1, and the cross-section of the electrode plate was cut with a cross-sectional polisher. Afterward, a carbon-containing layer of the cross-section of each of the negative electrode active materials of the example and comparative examples was analyzed by Raman spectroscopy. An R value was measured in any region of the carbon-containing layer of each negative electrode active material. The measured R values are shown in Table 1.

**R value: powder**

Raman spectroscopy was performed for each of the negative electrode active material powders of the example and comparative examples. An R value was measured in any region of each negative electrode active material. The measured R values are shown in Table 1.

**XRD analysis:**

d002 was obtained by XRD analysis for the amorphous carbon layer of each of the negative electrode active materials of the example and comparative examples.

**Charge capacity, discharge capacity, initial coulombic efficiency and charging C-rate**

The prepared half-cell was charged and discharged first at 0.1C and charged and discharged once at 0.2C in a range of 2.5 V to 4.2 V, and then charged and discharged 500 times (e.g., 500 cycles) at 0.1C. The initial coulombic efficiency (initial CE) was calculated by dividing initial discharge capacity by initial charge capacity, and the charging C-rate was calculated by dividing discharge capacity at $500^{th}$ cycle by initial discharge capacity. Charging and discharging methods and cut-off conditions were as follows.

Charging: constant current-constant voltage, 4.2 V/0.01C cut-off
Discharging: constant voltage, 2.5 V cut-off

The negative electrode active materials and cells used in the example and comparative examples were each evaluated.

Table 1

| | R value | | | XRD analysis result | Charge capacity | Discharge capacity | Initial CE | Charging C-rate |
|---|---|---|---|---|---|---|---|---|
| | First region | Second region | Powder | d002 (nm) | mAh/g | mAh/g | % | % |
| Example 1 | 0.34 | 0.66 | 0.20 | 0.3362 | 388 | 359 | 92.5 | 44 |
| Comparative Example 1 | - | 0.73 | 0.32 | 0.3359 | 391 | 352 | 90 | 42 |
| Comparative Example 2 | - | - | 0.72 | 0.6415 | 271 | 225 | 83 | 69 |
| Comparative Example 3 | - | - | 0.10 | 0.3356 | 398 | 356 | 89 | 38 |

As shown in Table 1, the negative electrode active material for a rechargeable lithium battery in the example provided high reversible capacity, and provided a fast-charging effect and high-rate capability.

As used herein, the term "Group" as utilized herein refers to a group of the Periodic Table of Elements according to the 1 to 18 grouping system of the International Union of Pure and Applied Chemistry ("IUPAC").

In the present disclosure, it will be understood that the term "comprise(s)/comprising," "include(s)/including," or "have/has/having" specifies the presence of stated features, integers, steps, operations, elements, and/or components, but do not preclude the presence or addition of one or more other features, integers, steps, operations, elements, components, and/or groups thereof. Additionally, the terms "comprise(s)/comprising," "include(s)/including," "have/has/having", or other similar terms include or support the terms "consisting of" and "consisting essentially of," indicating the presence of stated features, integers, steps, operations, elements, and/or components, without or essentially without the presence of other features, integers, steps, operations, elements, components, and/or groups thereof.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, or 5% of the stated value. Also, it should be understood that, even if the terms "about," "approximately," or "substantially" are not expressly recited in a given element (e.g., a claim element), the scope of such element is intended to include variations that are insubstantial or within the understanding of one of ordinary skill in the art. For example, numerical values and ranges provided herein are intended to include tolerances and measurement uncertainties that would be recognized by those skilled in the art, and the elements (e.g., claim elements) should be construed accordingly to encompass such equivalents.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

An electrode active material manufacturing apparatus, a battery manufacturing device, a battery pack, a battery management system (BMS) device, and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random-access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Although the example embodiments of the present disclosure have been described above, the present disclosure is not limited thereto, and it may implement various modifications within the scope of the appended claims, the detailed description of the present disclosure, and the accompanying drawings. It is obvious that these modifications also fall within the scope of the present disclosure. Therefore, the technical scope of the present disclosure is not to be limited to the content stated in the detailed description of the disclosure, but should be determined by the appended claims and equivalents thereof.

## Claims

1. A negative electrode active material for a rechargeable lithium battery (100), the negative electrode active material comprising:

   graphite (110); and
   an amorphous carbon-containing layer (120) surrounding the graphite (110),
   wherein the amorphous carbon-containing layer (120) at least includes a first region (130) and a second region (140), which have different R values of Equation 1, and
   the R value of Equation 1 in the first region is 0.5 or less:

   Equation 1

   $$R\ value = I_D/I_G,$$

   in Equation 1,
   $I_D$ being a maximum peak intensity of the D band at a frequency of 1360±50 $cm^{-1}$ obtained by Raman spectroscopy for the negative electrode active material, and
   $I_G$ being a maximum peak intensity of the G band at a frequency of 1580±50 $cm^{-1}$ obtained by Raman spectroscopy for the negative electrode active material.

2. The negative electrode active material as claimed in claim 1, wherein the R value of Equation 1 in the second region is higher than that in the first region.

3. The negative electrode active material as claimed in claim 1 or 2, wherein the R value of Equation 1 in the second region exceeds 0.5.

4. The negative electrode active material as claimed in any of the preceding claims, wherein the first region (130) and the second region (140) are continuously formed in the amorphous carbon-containing layer (120).

5. The negative electrode active material as claimed in any of the preceding claims, wherein the first region (130) and the second region (140) are mixed in the amorphous carbon-containing layer (120).

6. The negative electrode active material as claimed in any of the preceding claims, wherein, in the negative electrode active material, d002 obtained by XRD analysis is 0.336 nm to 0.337 nm.

7. The negative electrode active material as claimed in any of the preceding claims, wherein the negative electrode active material has a specific surface area of 0.5 $m^2/g$ to 2 $m^2/g$.

**8.** The negative electrode active material as claimed in any of the preceding claims, wherein the negative electrode active material has a R value ($I_D/I_G$) of $0.05 \leq I_D/I_G \leq 0.50$.

**9.** The negative electrode active material as claimed in any of the preceding claims, wherein the amorphous carbon-containing layer (120) has a thickness of 0.1 μm to 5 μm.

**10.** The negative electrode active material as claimed in any of the preceding claims, wherein the graphite (110) is natural graphite.

**11.** The negative electrode active material as claimed in claim 10, wherein the natural graphite comprises a secondary particle into which a plurality of primary particles are assembled.

**12.** The negative electrode active material as claimed in claim 10 or 11, wherein the natural graphite comprises flaky graphite.

**13.** The negative electrode active material as claimed in any of the preceding claims, wherein the graphite (110) and the amorphous carbon-containing layer (120) are at a weight ratio (graphite:amorphous carbon-containing layer) of 99:1 to 80:20 based on a total of 100 parts by weight of the negative electrode active material.

**14.** The negative electrode active material as claimed in claim 13, wherein the weight ratio is 95:5 to 85:15.

**15.** A rechargeable lithium battery (100), comprising:

a negative electrode (20) comprising the negative electrode active material as claimed in any of the preceding claims; and
a positive electrode (10).

FIG 1.

110
120
140
130

FIG 2.

160
110
150
(Ⅰ)
110
(Ⅱ)
110
170
180
120
180
130
140
120
130
140

FIG 3.

100
60
30
40
10
30
20
50

FIG 4.

100
22
12
50
21
11
20
30
40
10

FIG 5.

100
50
72
40
10
30
71
20

FIG 6.

100
50
40
20
30
10
70

FIG 7A.

INSIDE OF GRAPHITE
COATING LAYER

FIG 7B.

SECOND REGION OF
COATING LAYER
FIRST REGION OF
COATING LAYER

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240141328